# FASCICULE DE BREVET EUROPEEN

(11) **EP 0 436 674 B1**
(45) Date de publication et mention de la délivrance du brevet: **02.09.1998**
(21) Numéro de dépôt: 90901835.0
(22) Date de dépôt: 12.01.1990
(51) Int. Cl.: C04B 26/28, C04B 30/02

(54) **MATERIAU ISOLANT A BASE D'HYDROXYDE D'ALUMINIUM ET DE PARTICULES FIBREUSES, DESTINE NOTAMMENT A ETRE INSUFFLE SUR LA SURFACE D'UN PLANCHER**
ALUMINIUMHYDROXID UND FASERIGE PARTIKEL ENTHALTENDES ISOLIERENDES MATERIAL, INSBESONDERE ZUM EINBLASEN AUF FUSSBÖDEN
ALUMINIUM HYDROXIDE AND FIBROUS-BASED INSULATING MATERIAL, IN PARTICULAR FOR INJECTION ONTO A FLOOR SURFACE

(30) Priorité: 13.01.1989 FR 8900723
(43) Date de publication de la demande: 17.07.1991
(73) Titulaire: THOMAS, Jean, 31300 Toulouse (FR)
(72) Inventeur: THOMAS, Jean, 31300 Toulouse (FR)
(74) Mandataire: Cabinet BARRE LAFORGUE & associés
(86) Numéro de dépôt international: FR9000023
(87) Numéro de publication internationale: WO9008112

(56) Documents cités:
- FR-A- 2 510 100
- GB-A- 975 008
- GB-A- 2 079 129
- GB-A- 2 090 301
- US-A- 2 680 102
- CHEMICAL ABSTRACTS, Volume 82, 1975, (Columbus, Ohio, US), voir page 226, Abrege 34535m, & JP-A-49 097 878 (MATSUSHITA ELECTRIC WORKS, LTD) 17 Septembre 1974
- CHEMICAL ABSTRACTS, Volume 96, 1982, (Columbus, Ohio, US), voir page 343, Abrege 90735c, & JP-A-56 155 053 (OKAMURA, TATSUO) 1er Decembre 1981
- O.A. Neumüller, Römpps Chemie-Lexicon, 8ème Ed., 1987, page 3897, D-Sorbit

## Description

L'invention concerne un matériau isolant à base d'hydroxyde d'aluminium et de particules fibreuses, destiné notamment à être insuflé sur la surface d'un plancher.

Il existe à l'heure actuelle de nombreuses variétés de matériaux isolants utilisés dans le domaine du batiment, ainsi que plusieurs techniques pour la mise en oeuvre de ces matériaux. En premier lieu, les principaux matériaux utilisés sont la laine de verre, la laine de roche et des mousses plastiques cellulaires. D'autre part, ces matériaux peuvent etre mis en oeuvre, soit sous forme de panneaux, soit en vrac par pulvérisation ou insuflation. Tous ces matériaux présentent leurs qualités propres et permettent généralement d'obtenir une isolation thermique et accoustique satisfaisante. Toutefois, ils présentent également des inconvénients dont les principaux, en fonction du type de matériau, sont : une ininflammabilité insuffisante, une vulnérabilité vis à vis des rongeurs, et un prix de revient relativement élevé.

Pour pallier ces inconvénients, les recherches se sont orientées vers l'utilisation de déchets industriels pour la fabrication de matériaux isolants et ont conduit à la réalisation de matériaux comprenant des fibres cellulosiques obtenues à partir de résidus de papier. Divers types de matériaux isolants ont ainsi été réalisés à partir de ce produit de base. Toutefois, un seul permet d'allier les avantages recherchés, à savoir ininflammabilité, non vulnérabilité vis à vis des rongeurs et faible prix de revient. Ce matériau isolant, décrit dans les brevets FR 2.510.100 et FR 2.493.303 est composé principalement de fibres de cellulose et d'hydroxyde d'aluminium, c'est à dire de deux produits constituant des déchets industriels et dont le mélange permet d'allier les avantages précités.

Toutefois, ce matériau isolant présente lui-même des inconvénients. D'une part, il ne peut être mis en oeuvre que sous forme de panneaux (brevet FR 2.493.303) ou en vrac, par pulvérisation (brevet FR 2.510.100). Dans les deux cas, et pour des questions de résistance mécanique, l'épaisseur d'isolant est obligatoirement faible et ne confère qu'une relative isolation thermique. De plus, ces matériaux ne renferment que 15 % à 25 % en poids de fibres de cellulose. Or, c'est ce dernier produit qui confère au matériau ses qualités d'isolant thermique qui ne peuvent donc être que limitées.

La présente invention vise à pallier les inconvénients de ce dernier matériau isolant et a pour principal objectif de fournir un matériau isolant à base d'hydroxyde d'aluminium et de particules fibreuses alliant les avantages suivants : ininflammabilité, invulnérabilité vis à vis des rongeurs, faible coût de revient et très faible conductivité thermique.

Un autre objectif est de fournir un matériau isolant pouvant être mis en oeuvre sous forme de panneaux ou pulvérisé en vrac, mais principalement adapté pour être insufflé de façon à former une épaisseur importante d'isolant présentant une très bonne stabilité même dans les locaux exposés au vent.

A cet effet, l'invention concerne un matériau isolant destiné notamment à être insufflé sur la surface d'un plancher, et se présentant sous la forme de balles d'une densité comprise entre 160 kg/m³ et 250 kg/m³, caractérisé en ce qu'il est composé d'un mélange :
- de particules fibreuses organiques,
- d'hydroxyde d'aluminium en poudre obtenu par séchage et pulvérisation d'une boue d'hydroxyde d'aluminium,
- de sorbitol sous forme de poudre,
- et d'une poudre d'amidon.

Un tel mélange de produits permet de réaliser un matériau isolant présentant tous les avantages précités et particulièrement adapté pour être insufflé sous forme expansée.

En effet, les particules fibreuses confèrent au matériau ses qualités d'isolant. L'hydroxyde d'aluminium confère à ce matériau son caractère ininflammable et permet de réaliser un matériau classé M1. En outre, cet hydroxyde d'aluminium constitue un produit anti-rongeur qui provoque la mort de ces derniers dans un laps de temps très court, de l'ordre de trois heures.

Le sorbitol et la poudre d'amidon concourent quant à eux, à assurer la liaison de la masse fibreuse et à lier le matériau à la surface sur laquelle il est insuflé. Ces deux produits permettent donc d'assurer une garantie totale de stabilité du matériau isolant même dans le cas de combles fortement ventilés. De plus, et de façon inattendue, la poudre d'amidon permet non seulement de lier la masse fibreuse, mais permet également au matériau isolant de conserver sa structure expansée, une fois insuflée, avec un affaisement réduit.

Selon un mode de réalisation préférentiel, le matériau isolant est composé d'un mélange de :
- 80 % à 90 % en poids de particules fibreuses de cellulose,
- 7 % à 15 % en poids d'hydroxyde d'aluminium en poudre,
- 0,5 % à 3 % en poids de sorbitol en poudre,
- 2 % à 5 % en poids de poudre d'amidon.

On constate que le principal composant en pourcentage est constitué de particules fibreuses de cellulose qui constituent un exellent isolant, et confèrent au matériau une très faible conductivité thermique. En outre, ces particules fibreuses étant selon l'invention des particules de cellulose obtenues à partir de résidus de papiers, elles constituent une matière première de très faible prix de revient et nécessitant peu de traitements avant utilisation.

Ce dernier point permet de réaliser un matériau isolant dont le prix de revient est très concurrentiel par rapport aux matériaux connus actuellement.

En outre, le deuxième composant, en pourcentage, est également un déchet industriel inutile pour fabriquer des matériaux de construction, et dont le prix de revient est donc également très faible.

Par ailleurs, selon une autre caractéristique de l'invention, l'agent hygroscopique est du sorbitol en poudre. Le sorbitol permet, en effet, d'obtenir un bon controle du taux d'humidité et de maintenir ce dernier à une valeur aussi constante que possible favorisant l'action de liant de la poudre d'amidon.

Il est à noter enfin que ce matériau isolant ne contient aucune matière toxique et ne peut donc en aucune façon être la cause d'irritations ou autres désagréments.

Le procédé de fabrication d'un tel matériau isolant consiste à mélanger intimement l'hydroxyde d'aluminium, le sorbitol et la poudre d'amidon, à rajouter les particules fibreuses, et à compacter le matériau obtenu de façon à le conformer sous forme de balles de densité sensiblement comprise entre 160 kg/m3 et 250 kg/m3.

Le matériau isolant est donc produit sous forme de balles comprimées qui peuvent ensuite être conditionnées dans un film de polyéthylène. Ce mode de production permet de diminuer notamment l'encombrement du matériau isolant produit et par conséquent de réduire les coûts de stockage et de transport.

Ce matériau isolant est, en outre, principalement destiné à être mis en oeuvre en vrac, par insuflation. Le procédé d'isolation de la surface d'un plancher consiste alors à expanser le dit matériau se présentant sous forme de balles d'une densité comprise entre 20 kg/m3 et 40 kg/m3, et à insufler directement ce matériau sur la surface du plancher de façon à obtenir une épaisseur d'isolant sensiblement comprise entre 15 cm et 25 cm.

La couche d'isolant obtenue subit un affaisement de l'ordre de 20 % mais conserve tout de même sa structure expansée. Elle se trouve par ailleurs intimement liée à la surface du plancher, et éventuellement aux faces verticales de solives apparentes, garantissant contre tout risque de décollement.

Selon un mode de mise en oeuvre préférentiel, particulièrement adapté pour des combles fortement ventilés, on ajoute au matériau isolant, lors de son insuflation, 25 % à 35 % en poids d'eau pulvérisée sous forme de brouillard.

Cette adjonction d'eau a pour avantage d'entraîner un accrochage très rapide et quasi-immédiat du matériau isolant sur la surface du plancher, et d'augmenter la résistance à l'arrachement de la couche d'isolant. En outre, il a été constaté que le taux d'affaisement était également plus faible.

Deux exemples d'application destinés à illustrer plus en détail la présente invention sont décrits ci-dessous, à titre non limitatifs.

Dans ces deux exemples, le matériau isolant utilisé présente la composition suivante :
- 88 % de particules de cellulose obtenues à partir de résidus de papiers,
- 8,5 % d'hydroxyde d'aluminium en poudre,
- 0,5 % de sorbitol,
- 3 % de poudre d'amidon.

La fabrication de ce matériau isolant a été obtenue en dosant , dans un premier temps, respectivement le sorbitol, l'hydroxyde d'aluminium et la poudre d'amidon, puis en mélangeant intimement ces trois produits dans un malaxeur. Le mélange ainsi obtenu est ensuite amené dans un deuxième malaxeur ou sont également introduits les résidus de papier, et ou ces produits sont mélangés jusqu'à obtenir un matériau dans lequel le mélange initial se trouve incrusté dans et entre les fibres.

En dernier lieu, ce matériau est amené jusqu'à une presse ou il est compacté en balles d'une densité de 220 kg/m3 puis conditionné sous film de polyéthylène.

EXEMPLE 1 : Le matériau isolant compacté est expansé, au moyen d'un dispositif de souflage de type connu en soi, à une densité de 23 kg/m3 et souflé directement sur la surface d'un plancher comportant des solives apparentes d'une hauteur de 17 cm, jusqu'à obtenir une épaisseur d'isolant de 23 cm, soit un peu plus de 5 KG/m2.

Après stabilisation de cette couche d'isolant, le taux d'affaisement relevé a été de l'ordre de 20 %, c'est à dire que l'isolant recouvrait les solives et assurait une continuité de l'isolation. De plus, des essais de soufflerie ont montré que la couche d'isolant résistait correctement à l'arrachement.

La valeur de la résistance thermique de la couche d'isolation a été de 5 m2°C/W, et le coëfficient d'absorption accoustique moyen de 0,8.

EXEMPLE 2 : Le même matériau isolant a été insufflé dans les mêmes conditions et en un lieu similaire, avec adjonction de 30 %, en poids, d'eau pulvérisée en brouillard. Les tests de soufflerie ont révélé que l'accrochage de la couche d'isolant sur le plancher et les solives était quasi-immédiat.

De plus, après stabilisation, le taux d'affaisement était seulement de 15 %, et la résistance à l'arrachement supérieure à celle du premier exemple.

Par ailleurs, la résistance thermique de la couche d'isolation était de 5,3 m2°C/W et le coëfficient d'absorption acoustique de 0,8.

## Revendications

1. Matériau isolant destiné notamment à être insufflé sur la surface d'un plancher et se présentant sous la forme de balles d'une densité comprise entre 160 kg/m³ à 250 kg/m³, caractérisé en ce qu'il est composé d'un mélange :
- de particules fibreuses organiques,
- d'hydroxyde d'aluminium en poudre obtenu par séchage et pulvérisation d'une boue d'hydroxyde d'aluminium,
- de sorbitol sous forme de poudre,
- et d'une poudre d'amidon.

2. Matériau isolant selon la revendication 1 caractérisé en ce qu'il est composé d'un mélange de :
- 80 % à 90 % en poids de particules fibreuses organiques,
- 7 % à 15 % en poids d'hydroxyde d'aluminium en poudre,
- 0,5 % à 3 % en poids de poudre de sorbitol en poudre,
- 2 % à 5 % en poids de poudre d'amidon.

3. Matériau isolant selon l'une des revendications précédentes dans lequel les particules fibreuses sont des particules de cellulose obtenues à partir de résidus de papiers.

4. Procédé de fabrication d'un matériau isolant selon les revendications 1 à 3, caractérisé en ce qu'il consiste à mélanger intimement l'hydroxyde d'aluminium en poudre, la poudre de sorbitol et de la poudre d'amidon, à rajouter les particules fibreuses organiques, et à compacter le matériau obtenu de façon à le conformer sous forme de balles de densité comprise entre 160 kg/m³ et 250 kg/m³.

5. Procédé d'isolation de la surface d'un plancher au moyen d'un matériau isolant réalisé selon le prodé de la revendication 4, caractérisé en ce qu'il consiste à expanser le dit matériau se présentant sous forme de balles d'une densité comprise entre 160 kg/m³ à 250 kg/m³, à une densité comprise entre 20 kg/m³ et 40 kg/m³, et à insuffler directement ce matériau sur la surface du plancher de façon à obtenir une couche d'isolant d'épaisseur comprise entre 15 cm et 25 cm.

6. Procédé d'isolation selon la revendication 5 caractérisé en ce que l'on ajoute au matériau isolant, lors de son insufflation, 25 % à 35 % en poids, d'eau pulvérisée sous forme de brouillard.

## Patentansprüche

1. Isoliermaterial, insbesondere zum Blasen auf die Oberfläche einer Decke, das in der Form von Ballen mit einer Dichte im Bereich zwischen 160 kg/m³ und 250 kg/m³ vorliegt, dadurch gekennzeichnet, daß es sich aus einem Gemisch aus folgendem zusammensetzt:
- organische Faserpartikel,
- Aluminiumhydroxid in Pulverform, das erhalten wurde durch Trocknen und Pulverisieren von Aluminiumhydroxidschlamm,
- Sorbit in Pulverform, und
- Stärkepulver.

2. Isoliermaterial nach Anspruch 1, dadurch gekennzeichnet, daß es sich aus einem Gemisch aus folgendem zusammensetzt:
- 80 % bis 90 Gew.-% organische Faserpartikel,
- 7 bis 15 Gew.-% Aluminiumhydroxidpulver,
- 0,5 bis 3 Gew.-% Sorbitpulver,
- 2 bis 5 Gew.-% Stärkepulver.

3. Isoliermaterial nach einem der vorherigen Ansprüche, bei dem die Faserpartikel Zellulosepartikel sind, die aus Papierresten erhalten wurden.

4. Verfahren zur Herstellung eines Isoliermaterials nach den Ansprüchen 1 bis 3, dadurch gekennzeichnet, daß es die folgenden Schritte umfaßt: intensives Vermischen des Aluminiumhydroxidpulvers, Sorbitpulvers und von Stärkepulver, zugeben der organischen Faserpartikel und Verdichten des erhaltenen Materials, um es zu Ballen mit einer Dichte im Bereich zwischen 160 kg/m³ und 250 kg/m³ zu formen.

5. Verfahren zum Isolieren der Oberfläche einer Decke mit einem Isoliermaterial, hergestellt mit dem Verfahren nach Anspruch 4, dadurch gekennzeichnet, daß es die folgenden Schritte umfaßt: Ausdehnen des genannten Materials, das in der Form von Ballen mit einer Dichte im Bereich zwischen 160 kg/m³ und 250 kg/m³ vorliegt, auf eine Dichte im Bereich zwischen 20 kg/m³ und 40 kg/m³, und Blasen des Materials direkt auf die Oberfläche einer Decke, um eine Isolierschicht mit einer Stärke im Bereich zwischen 15 cm und 25 cm zu erhalten.

6. Isolierverfahren nach Anspruch 5, dadurch gekennzeichnet, daß dem Isoliermaterial während des Blasens 25 bis 35 Gew.-% Wasser zugegeben wird, das zu einem Nebel zerstäubt wurde.

## Claims

1. Insulating material designed in particular to be blown onto the surface of a floor and existing in the form of balls having a density of between 160 kg/m³ to 250 kg/m³, characterized in that it is composed of a mixture :
- of organic fibrous particles,
- of powdered aluminium hydroxide obtained by drying and spraying an aluminium hydroxide slurry,
- sorbitol in the form of powder,
- and a starch powder.

2. Insulating material according to claim 1, characterized in that it is composed of a mixture of :
- 80 % to 90 % by weight of organic fibrous particles,
- 7 % to 15 % by weight of powdered aluminium hydroxide,
- 0.5 % to 3 % by weight of powdered sorbitol,
- 2 % to 5 % by weight of starch powder.

3. Insulating material according to one of the preceding claims wherein the fibrous particles are cellulose particles obtained from paper residues.

4. Process for manufacturing an insulating material according to claims 1 to 3, characterized in that it consists of mixing intimately the powdered aluminium hydroxide, the sorbitol powder and starch powder, of adding the organic fibrous particles and of compacting the material obtained so as to form it into the shape of balls with a density between 160 kg/m³ and 250 kg/m³.

5. Process for insulating the surface of a floor by means of an insulating material prepared according to the process of claim 4, characterized in that it consists of expanding the said material existing in the form of balls having a density of between 160 kg/m³ to 250 kg/m³, to a density between 20 kg/m³ and 40 kg/m³, and of blowing this material directly onto the surface of the floor so as to obtain a layer of insulant with a thickness between 15 cm and 25 cm.

6. Insulation process according to claim 5, characterized in that 25 % to 35 % by weight of water, sprayed in the form of a mist, is added to the insulating material as it is blown.
